# EUROPÄISCHE PATENTSCHRIFT

(11) **EP 3 216 559 B1**
(45) Veröffentlichungstag und Bekanntmachung des Hinweises auf die Patenterteilung: **17.02.2021**
(21) Anmeldenummer: 17159926.9
(22) Anmeldetag: 08.03.2017
(51) Int. Cl.: B23Q 3/157, B23Q 5/04

(54) **WERKZEUGPOSITIONIERVORRICHTUNG ZUM VORPOSITIONIEREN EINES WERKZEUGAGGREGATES**
TOOL-POSITIONING DEVICE FOR PRE-POSITIONING OF A TOOL UNIT
DISPOSITIF DE POSITIONNEMENT D'OUTIL DESTINÉ À POSITIONNER À L'AVANCE UN MODULE D'OUTILLAGE

(30) Priorität: 10.03.2016 DE 102016104435
(43) Veröffentlichungstag der Anmeldung: 13.09.2017
(73) Patentinhaber: HOLZ-HER GmbH, 72622 Nürtingen (DE)
(72) Erfinder: LORBER, Denis, 72663 Großbettlingen (DE); STOLZ, Jochen, 72574 Bad Urach (DE)
(74) Vertreter: Hoeger, Stellrecht & Partner Patentanwälte mbB

(56) Entgegenhaltungen:
- EP-A1- 2 335 866
- EP-A2- 2 868 431
- DE-U1-202008 005 773
- JP-A- S61 188 057

## Beschreibung

Die Erfindung betrifft eine Werkzeugpositioniervorrichtung mit den Merkmalen des Oberbegriffes von Patentanspruch 1.

Außerdem betrifft die Erfindung eine Holzbearbeitungsmaschine mit einer derartigen Werkzeugpositioniervorrichtung.

Zum Bearbeiten von plattenförmigen Werkstücken aus Holz und Holzersatzstoffen, vor allem Spanplatten, sind Holzbearbeitungsmaschinen bekannt mit einem Werkstückträger zum Tragen des plattenförmigen Werkstückes und mit einer Führungseinrichtung, an der eine Arbeitsspindel verfahrbar gelagert ist, und mit einem einwechselbaren Werkzeugaggregat, das mit der Arbeitsspindel lösbar verbindbar ist. Das Werkzeugaggregat weist üblicherweise ein Einspannende auf, beispielsweise einen Steilkegel, und die Arbeitsspindel weist eine Werkzeugaufnahme auf, beispielswiese eine Steilkegelaufnahme, in die das Einspannende des Werkzeugaggregates eingesetzt und eingespannt werden kann. Häufig umfasst die Holzbearbeitungsmaschine auch ein Werkzeugmagazin mit mehreren Werkzeughalterungen, die mit austauschbaren Werkzeugaggregaten bestückt werden können. Die Werkzeugaggregate weisen einen Werkzeugkopf auf mit einem um eine Werkzeugachse drehend antreibbaren Werkzeug, beispielsweise einem Fräser oder Bohrer, und das Werkzeug kann mit Hilfe der Arbeitsspindel um die Werkzeugachse in Drehung versetzt werden. Häufig ist die Werkzeugachse fluchtend zur Spindelachse der Arbeitsspindel ausgerichtet, und zur Bearbeitung des Werkstückes wird die Arbeitsspindel in Richtung der Spindelachse bewegt. Es sind allerdings auch Werkzeugaggregate bekannt, die ein Winkelgetriebe aufweisen, so dass die Werkzeugachse zur Spindelachse geneigt ist. Insbesondere kann die Werkzeugachse senkrecht zur Spindelachse ausgerichtet sein. Dies erlaubt es beispielsweise, mit Hilfe eines Bohrers eine Bohrung in eine Stirnseite eines plattenförmigen Werkstücks einzubringen oder mit Hilfe eines Scheibenfräsers eine Nut in die Oberseite des plattenförmigen Werkstücks einzuformen, wobei die Arbeitsspindel entlang der Führungseinrichtung der Holzbearbeitungsmaschine parallel zum plattenförmigen Werkstück bewegt wird.

Erfolgt die Bearbeitung eines plattenförmigen Werkstücks mit Hilfe eines Werkzeugaggregates, das ein Winkelgetriebe aufweist, so dass die Werkzeugachse schräg oder senkrecht zur Spindelachse ausgerichtet ist, dann muss das Werkzeugaggregat eine vorgegebene Ausrichtung oder Positionierung einnehmen, so dass die Werkzeugachse relativ zur Spindelachse eine vorgegebene Winkelstellung einnimmt. Die Positionierung des Werkzeugaggregates kann hierbei mit Hilfe eines koaxial zur Spindelachse rotierbaren Trägerteils erfolgen. Dies erfordert allerdings einen beträchtlichen Konstruktions- und Herstellungsaufwand und ist daher mit erheblichen Herstellungskosten verbunden.

Eine Werkzeugpositioniervorrichtung mit den Merkmalen des Oberbegriffes von Patentanspruch 1 ist aus dem Dokument DE 20 2008 005 773 U1 bekannt.

Aufgabe der vorliegenden Erfindung ist es daher, ein Werkzeugaggregat auf kostengünstigere Weise in einer vorgegebenen Winkelstellung relativ zur Spindelachse auszurichten, wobei eine drehfeste Halterung des Werkzeugaggregates an der Aufnahmeeinrichtung sichergestellt ist.

Diese Aufgabe wird durch eine Werkzeugpositioniervorrichtung mit den Merkmalen von Patentanspruch 1 gelöst.

Die erfindungsgemäße Werkzeugpositioniervorrichtung ist zum Vorpositionieren eines in eine Arbeitsspindel einer Holzbearbeitungsmaschine einwechselbaren Werkzeugaggregates ausgestaltet. Die Werkzeugpositioniervorrichtung weist eine um eine Schwenkachse schwenkbar gelagerte Aufnahmeeinrichtung zur Aufnahme des Werkzeugaggregates sowie einen Schwenkantrieb zum Verschwenken der Aufnahmeeinrichtung um die Schwenkachse in vorgegebene Winkelstellungen auf, wobei das Werkzeugaggregat mittels der Werkzeugpositioniervorrichtung in unterschiedlichen Ausrichtungen relativ zur Arbeitsspindel in die Arbeitsspindel einwechselbar ist.

In die Erfindung fließt der Gedanke mit ein, dass eine kostengünstigere Ausrichtung des Werkzeugaggregates in einer vorgegebenen Winkelstellung relativ zur Spindelachse durch eine separate, von der Arbeitsspindel getrennte Werkzeugpositioniervorrichtung erzielt werden kann. Die Werkzeugpositioniervorrichtung weist eine Aufnahmeeinrichtung auf, in die das an der Arbeitsspindel angeordnete Werkzeugaggregat eingesetzt werden kann. Das Werkzeugaggregat kann hierbei zunächst eine erste Winkelstellung einnehmen, so dass die Werkzeugachse eine erste Ausrichtung relativ zur Spindelachse aufweist. Anschließend kann die Arbeitsspindel vom Werkzeugaggregat getrennt werden und die Aufnahmeeinrichtung kann zusammen mit dem eingesetzten Werkzeugaggregat mit Hilfe eines Schwenkantriebs der Werkzeugpositioniervorrichtung um eine Schwenkachse in eine gewünschte zweite Winkelstellung verschwenkt werden. Nach erfolgter Schwenkbewegung kann dann die Arbeitsspindel wieder mit dem Werkzeugaggregat gekoppelt werden und das Werkzeugaggregat kann der Aufnahmeeinrichtung entnommen werden. Zur anschließenden Bearbeitung des Werkstückes weist dann das Werkzeugaggregat die mittels der Werkzeugpositioniervorrichtung eingenommene zweite Winkelstellung ein.

Das Werkzeugaggregat weist häufig eine Drehmomentstütze auf, beispielsweise einen Zapfen oder Dorn, der seitlich neben dem Einspannende des Werkzeugaggregates angeordnet ist und der beim Befestigen des Werkzeugaggregates an der Arbeitsspindel in eine korrespondiere Aufnahme der Arbeitsspindel eintaucht. Gemäß der Erfindung weist die Aufnahmeeinrichtung der Werkzeugpositioniervorrichtung eine Aussparung für die Drehmomentstütze auf. Dies erlaubt zum einen eine drehfeste Halterung des Werkzeugaggregates an der Aufnahmeeinrichtung, und zum anderen ermöglicht es die Übergabe des Werkzeugaggregates an die Aufnahmeeinrichtung in einer vorgegebenen Stellung des Werkzeugaggregates, da die Drehmomentstütze nur in einer vorgegebenen Stellung des Werkzeugaggregates in die korrespondierende Aussparung der Aufnahmeeinrichtung eingesetzt werden kann. Die Aussparung der Aufnahmeeinrichtung ermöglicht somit auf konstruktiv einfache Weise eine Kontrolle der Stellung des Werkzeugaggregates bei dessen Übergang von der Arbeitsspindel zur Aufnahmeeinrichtung und auch beim Übergang von der Aufnahmeeinrichtung zurück zur Arbeitsspindel.

Es kann vorgesehen sein, dass die Aufnahmeeinrichtung mittels des Schwenkantriebs zwischen zwei Winkelstellungen hin und her verschwenkbar ist. Eine zweite Winkelstellung kann bezogen auf die Schwenkachse der Aufnahmeeinrichtung beispielsweise um 90° zu einer ersten Winkelstellung versetzt sein.

Von besonderem Vorteil ist es, wenn die Aufnahmeeinrichtung mittels des Schwenkantriebs zwischen mehr als zwei Winkelstellungen hin und her verschwenkt werden kann.

Günstig ist es, wenn die Aufnahmeeinrichtung mittels des Schwenkantriebs zwischen drei, vier, sechs oder acht um die Schwenkachse gleichmäßig verteilt angeordnete Winkelstellungen hin und her verschwenkt werden kann. Dies erlaubt es, ein in die Aufnahmeeinrichtung eingesetztes Werkzeugaggregat, dessen Werkzeugachse schräg oder senkrecht zur Spindelachse und damit schräg oder senkrecht zur Längsachse des Einspannendes des Werkzeugaggregates ausgerichtet ist, je nach beabsichtigter Bearbeitung des plattenförmigen Werkstückes wahlweise in einer von mehreren Winkelstellungen vorzupositionieren und mit der Arbeitsspindel zu verbinden.

Bei einer bevorzugten Ausgestaltung der Erfindung durchgreift die Schwenkachse die Aufnahmeeinrichtung. Insbesondere kann vorgesehen sein, dass die Längsachse des Einspannendes des in die Aufnahmeeinrichtung eingesetzten Werkzeugaggregats koaxial zur Schwenkachse der Aufnahmeeinrichtung ausgerichtet werden kann.

Die Aussparung für die Drehmomentstütze des Werkzeugaggregates mündet günstigerweise in eine freie Stirnseite der Aufnahmeeinrichtung ein. Dies erlaubt es, das Werkzeugaggregat an der freien Stirnseite der Aufnahmeeinrichtung zu positionieren und dann relativ zur Aufnahmeeinrichtung zu bewegen, um die Drehmomentstütze in die Aussparung einzuführen.

Um das Werkzeugaggregat an der Aufnahmeeinrichtung lösbar zu fixieren, weist die Werkzeugpositioniervorrichtung bei einer vorteilhaften Ausführungsform der Erfindung eine Halteeinrichtung auf.

Günstigerweise ist die Halteeinrichtung an der Aufnahmeeinrichtung angeordnet.

Die Halteeinrichtung ist bevorzugt mit der Aufnahmeeinrichtung drehfest verbunden. Dies erlaubt es, die Halteeinrichtung zusammen mit der Aufnahmeeinrichtung um die Schwenkachse in eine gewünschte Winkelstellung zu verschwenken.

Die Halteeinrichtung weist bei einer vorteilhaften Ausgestaltung der Erfindung einen Werkzeuggreifer auf mit zwei Greifarmen zum Ergreifen des Werkzeugaggregates.

Der Werkzeuggreifer ist günstigerweise zangenartig ausgestaltet und weist zwei über eine Rückstellfeder miteinander gekoppelte Greifarme auf, in die das Werkzeugaggregat eingesetzt werden kann, wobei die Greifarme entgegen einer elastischen Rückstellkraft der Rückstellfeder auseinanderspreizen.

Von Vorteil ist es, wenn die Schwenkachse der Aufnahmeeinrichtung mittig zwischen den beiden Greifarmen des Werkzeuggreifers verläuft.

Bei einer bevorzugten Ausgestaltung der Erfindung weist die Aufnahmeeinrichtung eine um die Schwenkachse verschwenkbare Aufnahmegabel auf mit zwei im Abstand zueinander angeordneten Aufnahmezinken, zwischen die ein vorzugsweise zylindrisch ausgestalteter Halteabschnitt des Werkzeugaggregates eingesetzt werden kann.

Bevorzugt verläuft die Schwenkachse der Aufnahmeeinrichtung mittig zwischen den beiden Aufnahmezinken der Aufnahmegabel.

Die Aufnahmeeinrichtung weist bevorzugt einen Rahmen auf, der die Aufnahmegabel ausbildet. Der Rahmen kann vom Schwenkantrieb um die Schwenkachse verschwenkt werden.

Besonders vorteilhaft ist es, wenn der Rahmen einen oberen und einen unteren Schenkel aufweist, die über einen Steg miteinander verbunden sind, wobei der obere Schenkel die Aufnahmegabel ausbildet. Dies erlaubt es, das Werkzeugaggregat in den Bereich zwischen dem oberen Schenkel und dem unteren Schenkel einzusetzen, wobei es die am oberen Schenkel angeordnete Aufnahmegabel durchgreift und mit seinem Einspannende über die Aufnahmegabel herausragt.

Günstigerweise ist auf der dem unteren Schenkel abgewandten Oberseite des oberen Schenkels die voranstehend erläuterte Halteeinrichtung angeordnet zum lösbaren Fixieren des Werkzeugaggregates an der Aufnahmeeinrichtung.

Beispielsweise kann vorgesehen sein, dass auf der dem unteren Schenkel abgewandten Oberseite des oberen Schenkels der bereits erwähnte Werkzeuggreifer gehalten ist.

Bei einer vorteilhaften Ausgestaltung der Erfindung ist die Aufnahmeeinrichtung zwischen einer Werkzeugübergabestellung und einer Parkstellung hin und her bewegbar. Nimmt die Aufnahmeeinrichtung die Werkzeugübergabestellung ein, so kann eine Übergabe des Werkzeugaggregates von der Arbeitsspindel zur Aufnahmeeinrichtung und von der Aufnahmeeinrichtung zur Arbeitsspindel erfolgen. Die Aufnahmeeinrichtung kann in eine Parkstellung bewegt werden. Die Parkstellung kann derart gewählt werden, dass eine Bearbeitung eines plattenförmigen Werkstücks mittels des an der Arbeitsspindel angeordneten Werkzeugaggregates von der Aufnahmeeinrichtung nicht behindert wird. Die Parkstellung ist daher bevorzugt außerhalb des Arbeitsraumes der Arbeitsspindel angeordnet.

Es kann vorgesehen sein, dass zum Einsetzen des Werkzeugaggregates in die Aufnahmeeinrichtung und zum Entnehmen des Werkzeugaggregates aus der Aufnahmeeinrichtung die Aufnahmeeinrichtung jeweils ihre Werkzeugübergabestellung einnimmt und das Werkzeugaggregat mittels der Arbeitsspindel relativ zur Aufnahmeeinrichtung bewegt wird. Die Arbeitsspindel ist hierzu günstigerweise in einer X-Richtung und einer Y-Richtung verfahrbar.

Es kann aber auch vorgesehen sein, dass die Arbeitsspindel nur in einer Richtung, beispielsweise nur in Y-Richtung verfahrbar ist und die Aufnahmeeinrichtung zum Einsetzen des Werkzeugaggregates in die Aufnahmeeinrichtung und/oder zum Entnehmen des Werkzeugaggregates aus der Aufnahmeeinrichtung in einer zweiten Richtung, beispielsweise in X-Richtung bewegt wird.

Eine Übergabe des Werkzeugaggregates von der Arbeitsspindel zur Aufnahmeeinrichtung der Werkzeugpositioniervorrichtung kann beispielsweise dadurch erfolgen, dass zunächst die Aufnahmeeinrichtung in ihrer Werkzeugübergabestellung eine erste Winkelstellung einnimmt und anschließend das noch an der Arbeitsspindel festgelegte Werkzeugaggregat durch Bewegen der Arbeitsspindel in die ortsfeste Aufnahmeeinrichtung eingesetzt wird. Danach kann dann das Werkzeugaggregat von der Arbeitsspindel gelöst werden und die Winkelstellung des Werkzeugaggregates kann geändert werden, indem die Aufnahmeeinrichtung um die Schwenkachse verschwenkt wird. Nimmt die Aufnahmeeinrichtung und mit dieser auch das Werkzeugaggregat dann die geänderte Winkelstellung ein, so kann das Werkzeugaggregat wieder mit der Arbeitsspindel gekoppelt werden und anschließend kann die Aufnahmeeinrichtung bei ortsfest gehaltener Arbeitsspindel in die Parkstellung bewegt werden.

Es kann auch vorgesehen sein, dass eine Übergabe des Werkzeugaggregates von der Arbeitsspindel zur Aufnahmeeinrichtung der Werkzeugpositioniervorrichtung dadurch erfolgt, dass zunächst die Arbeitsspindel mit dem daran festgelegten Werkzeugaggregat in einer vorgegebenen Stellung positioniert wird und anschließend die Aufnahmeeinrichtung von der Parkstellung in die Werkzeugübergabestellung bewegt wird, wobei das an der ortsfesten Arbeitsspindel gehaltene Werkzeugaggregat in die Aufnahmeeinrichtung eintaucht. Hat die Aufnahmeeinrichtung ihre Werkzeugübergabestellung erreicht, so kann das Werkzeugaggregat an der Aufnahmeeinrichtung festgelegt und die Arbeitsspindel vom Werkzeugaggregat gelöst werden. Nach Änderung der Winkelstellung kann dass das Werkzeugaggregat wieder mit der Arbeitsspindel gekoppelt und durch Bewegen der Arbeitsspindel von der Aufnahmeeinrichtung getrennt werden.

Bei einer bevorzugten Ausgestaltung der Erfindung ist die Aufnahmeeinrichtung an einem Tragteil der Werkzeugpositioniervorrichtung um die Schwenkachse verschwenkbar gelagert. Um die Aufnahmeeinrichtung zwischen der Werkzeugübergabestellung und der Parkstellung hin und her zu bewegen, ist es günstig, wenn die Aufnahmeeinrichtung zusammen mit dem Tragteil zwischen der Werkzeugübergabestellung und der Parkstellung hin und her bewegbar ist.

Günstigerweise ist das Tragteil zusammen mit der Aufnahmeeinrichtung zwischen der Werkzeugübergabestellung und der Parkstellung linear verschiebbar.

Es kann beispielsweise vorgesehen sein, dass das Tragteil an einem Führungselement verschiebbar gelagert ist.

Das Führungselement ist günstigerweise als Führungsprofil ausgestaltet. Das Führungsprofil kann beispielsweise eine Führungsnut aufweisen, insbesondere eine schwalbenschwanzförmige Führungsnut.

Der Schwenkantrieb zum Verschwenken der Aufnahmeeinrichtung ist vorteilhafterweise am Tragteil gehalten.

Bevorzugt weist der Schwenkantrieb ein Kolben-Zylinderaggregat oder einen Elektromotor auf.

Zum Bewegen der Aufnahmeeinrichtung zwischen der Werkzeugübergabestellung und der Parkstellung kommt vorzugsweise ein Stellantrieb zum Einsatz.

Der Stellantrieb weist bei einer vorteilhaften Ausführungsform der Erfindung ein hydraulisches oder pneumatisches Kolben-Zylinderaggregat oder einen Elektromotor, insbesondere einen Stellmotor auf.

Wie eingangs erwähnt, betrifft die Erfindung auch eine Holzbearbeitungsmaschine mit einer Werkzeugpositioniervorrichtung der voranstehend erläuterten Art. Die Holzbearbeitungsmaschine weist einen Werkstückträger auf zum Tragen eines plattenförmigen Werkstücks aus Holz oder einem Holzersatzstoff. Außerdem weist die Holzbearbeitungsmaschine eine Führungseinrichtung auf, an der eine Arbeitsspindel verfahrbar gelagert ist. Darüber hinaus umfasst die Holzbearbeitungsmaschine ein einwechselbares Werkzeugaggregat, das mit der Arbeitsspindel lösbar verbindbar ist, sowie eine Werkzeugpositioniervorrichtung nach einem der Patentansprüche 1 bis 4.

Es kann beispielsweise vorgesehen sein, dass die Holzbearbeitungsmaschine als vertikales oder horizontales Bearbeitungszentrum ausgestaltet ist.

Das vertikale Bearbeitungszentrum kann eine Stützwand aufweisen, die um einen Winkel von etwa 5° bis etwa 10° zur Vertikalen geneigt ist und deren horizontale Längsausrichtung eine X-Richtung und deren vertikale Ausrichtung eine Y-Richtung definiert. Das Bearbeitungszentrum kann außerdem einen am unteren Ende der Stützwand angeordneten Werkstückträger aufweisen, auf den ein plattenförmiges Werkstück aufsetzbar ist, sowie eine in Y-Richtung längs eines Führungsbalkens verfahrbare Arbeitsspindel. Darüber hinaus kann das Bearbeitungszentrum eine Transporteinrichtung aufweisen zum Verfahren des Werkstücks in X-Richtung längs des Werkstückträgers, wobei die Transporteinrichtung mindestens ein Halteglied zum Fixieren des Werkstücks an der Transporteinrichtung aufweist. Die Arbeitsspindel kann somit in Y-Richtung relativ zum Werkstück verfahren werden, und das Werkstück kann in X-Richtung relativ zur Arbeitsspindel verfahren werden. Das Bearbeitungszentrum kann darüber hinaus eine Werkzeugpositioniervorrichtung der voranstehend genannten Art aufweisen.

Die Werkzeugpositioniervorrichtung ist günstigerweise unterhalb des Werkstückträgers an einem Maschinengestell gehalten, wobei die Aufnahmeeinrichtung in X-Richtung zwischen einer Werkzeugübergabestellung und einer Parkstellung hin und her bewegt werden kann, und wobei die Aufnahmeeinrichtung um eine Schwenkachse verschwenkt werden kann, die senkrecht zur X-Richtung und senkrecht zur Y-Richtung ausgerichtet ist. Soll die Winkelstellung eines an der Arbeitsspindel angeordneten Werkzeugaggregats geändert werden, so kann das zunächst noch an der Arbeitsspindel festgelegte Werkzeugaggregat durch eine Relativbewegung zwischen der Arbeitspindel und der Aufnahmeeinrichtung in die Aufnahmeeinrichtung eingesetzt werden. Anschließend dann die Arbeitsspindel vom Werkzeugaggregat getrennt und das Werkzeugaggregat kann zusammen mit der Aufnahmeeinrichtung um die Schwenkachse so weit verschwenkt werden, dass das Werkzeugaggregat eine gewünschte Winkelstellung einnimmt. Anschließend kann das Werkzeugaggregat wieder an der Arbeitsspindel festgelegt und durch eine Relativbewegung zwischen der Arbeitsspindel und der Aufnahmeeinrichtung der Aufnahmeeinrichtung entnommen werden, so dass eine Bearbeitung des Werkstücks mittels des Werkzeugaggregats erfolgen kann, das nunmehr die gewünschte Winkelstellung einnimmt.

Die nachfolgende Beschreibung einer vorteilhaften Ausführungsform der Erfindung dient im Zusammenhang mit der Zeichnung der näheren Erläuterung. Es zeigen:
- Figur 1:: eine Vorderansicht einer vorteilhaften Ausführungsform einer erfindungsgemäßen Holzbearbeitungsmaschine mit einer vorteilhaften Ausführungsform einer erfindungsgemäßen Werkzeugpositioniervorrichtung;
- Figur 2:: eine vergrößerte Darstellung der Werkzeugpositioniervorrichtung aus Figur 1, wobei eine Aufnahmeeinrichtung der Werkzeugpositioniervorrichtung eine erste Winkelstellung einnimmt;
- Figur 3:: eine Ansicht der Werkzeugpositioniervorrichtung aus Figur 2 in Richtung von Pfeil A;
- Figur 4:: eine Ansicht der Werkzeugpositioniervorrichtung entsprechend Figur 2, wobei die Aufnahmeeinrichtung eine zweite Winkelstellung einnimmt;
- Figur 5:: eine Ansicht der Werkzeugpositioniervorrichtung aus Figur 4 in Richtung von Pfeil B;
- Figur 6:: eine perspektivische Darstellung der Werkzeugpositioniervorrichtung;
- Figur 7:: eine perspektivische Darstellung der Werkzeugpositioniervorrichtung bei der Übergabe eines Werkzeugaggregates an eine Arbeitsspindel der Holzbearbeitungsmaschine aus Figur 1;
- Figur 8:: eine vergrößerte Darstellung von Detail C aus Figur 7.

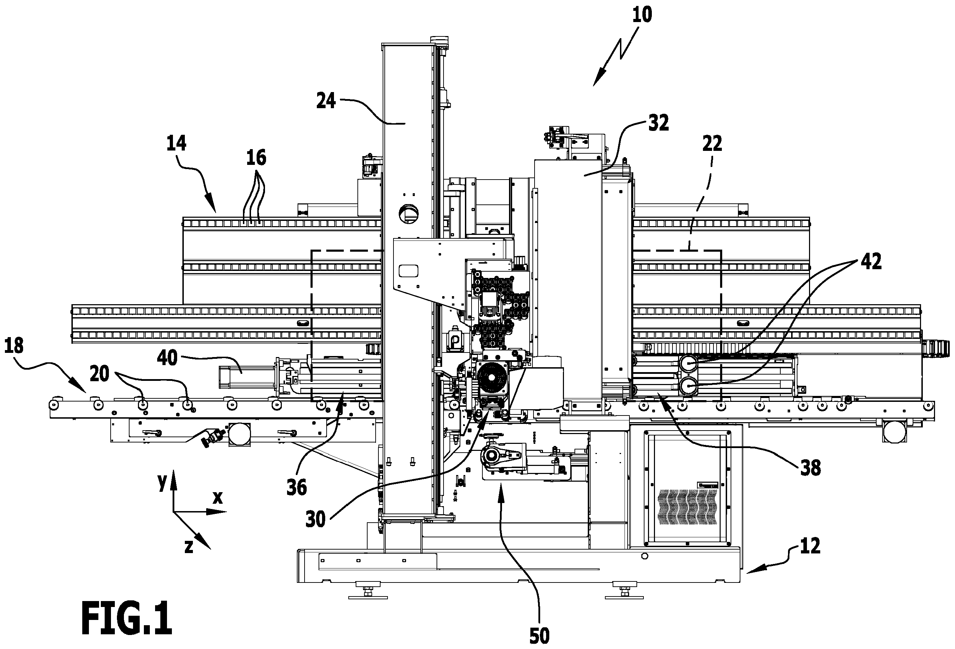

In Figur 1 ist eine vorteilhafte Ausführungsform einer erfindungsgemäßen Holzbearbeitungsmaschine in Form eines vertikalen Bearbeitungszentrums schematisch dargestellt, das insgesamt mit dem Bezugszeichen 10 belegt ist. Es umfasst ein Maschinengestell 12, das eine in einem Winkel von etwa 5° bis 10° zur Vertikalen geneigte Stützwand 14 trägt. Die Stützwand 14 bildet eine Art Stützrost aus, der eine Vielzahl von Stützrollen 16 aufweist. Am unteren Ende der Stützwand 14 ist im Abstand zu dieser ein Werkstückträger 18 angeordnet, der eine Vielzahl von Auflagerollen 20 aufweist. Auf die Auflagerollen 20 kann ein in Figur 1 gestrichelt dargestelltes plattenförmiges Werkstück 22 aufgesetzt werden, das von der Stützwand 14 abgestützt wird.

Die horizontale Längsausrichtung der Stützwand 14 definiert eine X-Richtung und die vertikale Ausrichtung der Stützwand 14 definiert eine Y-Richtung des vertikalen Bearbeitungszentrums 10. Eine Z-Richtung wird durch die Flächennormale der Stützwand 14 definiert.

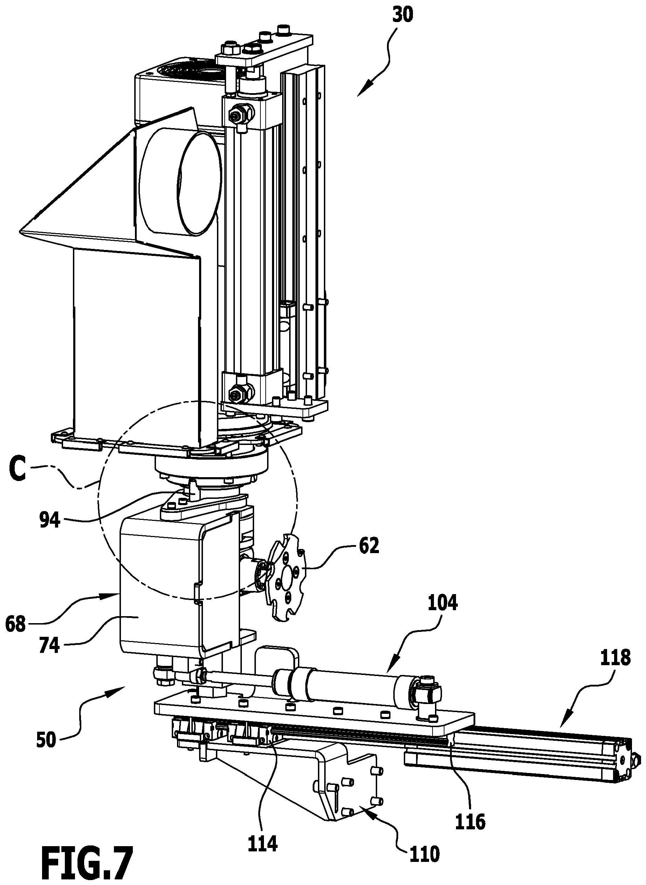

Vor der Stützwand 14 ist am Maschinengestell 12 ein sich in Y-Richtung erstreckender Führungsbalken 24 gehalten, an dem eine in Figur 7 vergrößert dargestellte Arbeitsspindel 30 in Y-Richtung und Z-Richtung verfahrbar gelagert ist.

Bezogen auf die X-Richtung im Abstand zum Führungsbalken 24 ist am Maschinengestell 12 vor der Stützwand 14 ein Werkzeugmagazin 32 gehalten, das mit einwechselbaren Werkzeugen oder Werkzeugaggregaten bestückt werden kann. Dies gibt die Möglichkeit, im Werkzeugmagazin 32 verschiedene Werkzeuge oder Werkzeugaggregate zu bevorraten, die bei Bedarf zum Einsatz kommen können.

Im Bereich zwischen der Stützwand 14 und dem Werkstückträger 18 ist eine Transporteinrichtung 36 angeordnet, mit deren Hilfe das Werkstück 22 in X-Richtung hin und her bewegt werden kann. Die Transporteinrichtung 36 weist hierzu einen Transportschlitten 38 auf, der mit Hilfe eines Antriebsmotors 40 in X-Richtung verfahren werden kann und mehrere Saugköpfe 42 trägt, die in üblicher Weise von einer in der Zeichnung nicht dargestellten Unterdruckquelle mit Unterdruck beaufschlagbar sind. Mit Hilfe der Saugköpfe 42 kann das Werkstück 22 am Transportschlitten 38 lösbar fixiert werden. Durch Verfahren des Transportschlittens 38 kann das Werkstück 22 in X-Richtung entlang des Werkstückträgers 18 hin und her verfahren werden.

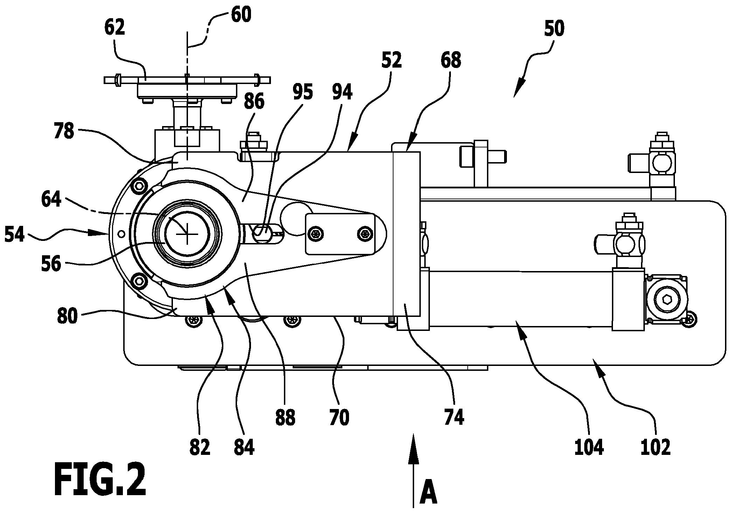

Unterhalb des Werkstückträgers 18 ist bezogen auf die X-Richtung im Abstand zum Führungsbalken 24 eine vorteilhafte Ausführungsform einer erfindungsgemäßen Werkzeugpositioniervorrichtung angeordnet, die in den Figuren 2 bis 8 vergrößert dargestellt und insgesamt mit dem Bezugszeichen 50 belegt ist.

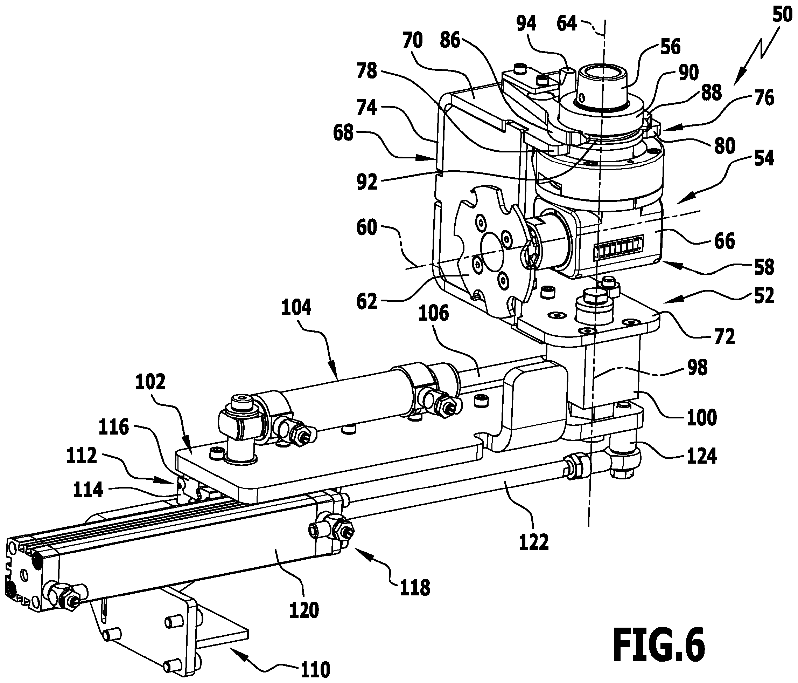

Wie insbesondere aus Figur 6 deutlich wird, weist die Werkzeugpositioniervorrichtung 50 eine Aufnahmeeinrichtung 52 auf zur Aufnahme eines Werkzeugaggregates 54. Das Werkzeugaggregat 54 weist im dargestellten Ausführungsbeispiel ein als Steilkegel ausgestaltetes Einspannende 56 auf und einen im Abstand zum Einspannende 56 angeordneten Werkzeugkopf 58 mit einem um eine Werkzeugachse 60 drehend antreibbaren Werkzeug, das im dargestellten Ausführungsbeispiel als Scheibenfräser 62 ausgebildet ist. Die Werkzeugachse 60 ist senkrecht zu einer Längsachse 64 des Werkzeugaggregates 54 ausgerichtet. Der Scheibenfräser 62 kann über ein Winkelgetriebe 66 des Werkzeugaggregates 54 von der Arbeitsspindel 30 in Drehung versetzt werden.

Die Aufnahmeeinrichtung 52 weist einen U-förmigen Rahmen 68 auf mit einem oberen Schenkel 70 und einem unteren Schenkel 72, die über einen Steg 74 starr miteinander verbunden sind. Der obere Schenkel 70 ist parallel zum unteren Schenkel 72 ausgerichtet und bildet mit seinem dem Steg 74 abgewandten freien Ende eine Aufnahmegabel 76 aus mit einem ersten Aufnahmezinken 78 und einem zweiten Aufnahmezinken 80.

Auf der dem unteren Schenkel 72 abgewandten Oberseite des oberen Schenkels 70 ist eine Halteeinrichtung 82 zum Halten des Werkzeugaggregates 54 an der Aufnahmeeinrichtung 52 angeordnet. Die Halteeinrichtung 82 ist in Form eines zangenartigen Werkzeuggreifers 84 ausgestaltet, der zwei Greifarme 86, 88 aufweist.

Das Werkzeugaggregat 54 weist im Bereich zwischen dem Einspannende 56 und dem Winkelgetriebe 66 einen Halteabschnitt 90 auf, der zwischen die Aufnahmezinken 78, 80 der Aufnahmegabel 76 eingesetzt werden kann und eine umlaufende Haltenut 92 aufweist, in die beim Einsetzen des Werkzeugaggregats 54 in die Aufnahmeeinrichtung 52 die Greifarme 86 und 88 des Werkzeuggreifers 84 eingreifen.

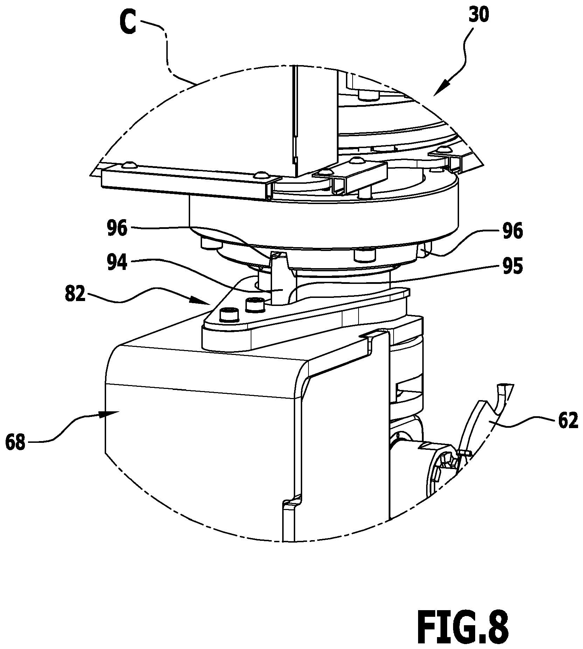

Wie insbesondere aus den Figuren 7 und 8 deutlich wird, ist an der dem Werkzeugkopf 58 abgewandten Oberseite des Halteabschnitts 90 des Werkzeugaggregats 54 eine Drehmomentstütze angeordnet, die im dargestellten Ausführungsbeispiel als Bolzen 94 ausgebildet ist. Beim Einsetzen des Werkzeugaggregates 54 in die Aufnahmeeinrichtung 52 greift der Bolzen 94 mit seinem dem Halteabschnitt 90 zugewandten Endbereich in eine längliche Aussparung 95 ein, die zwischen den beiden Aufnahmezinken 78, 80 angeordnet ist. Ist das Werkzeugaggregat 54 an der Arbeitsspindel 30 festgelegt, dann greift der Bolzen 94 mit seinem freien Endbereich in eine von mehreren in Umfangsrichtung gleichmäßig verteilt angeordnete Nuten 96 ein, die an der Arbeitsspindel 30 angeordnet sind.

Der untere Schenkel 72 des Rahmens 68 ist um eine Schwenkachse 98 verschwenkbar an einem Lagerteil 100 gelagert. Das Werkzeugaggregat 54 kann derart in die Aufnahmeeinrichtung 52 eingesetzt werden, dass die Längsachse 64 des Werkzeugaggregates 54 mit der Schwenkachse 98 der Aufnahmeeinrichtung 52 fluchtet.

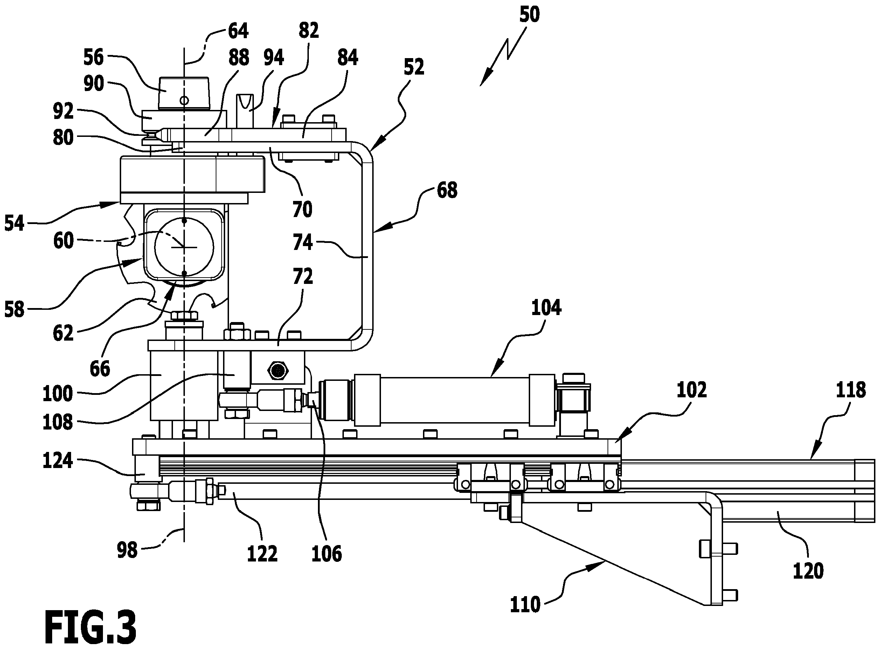

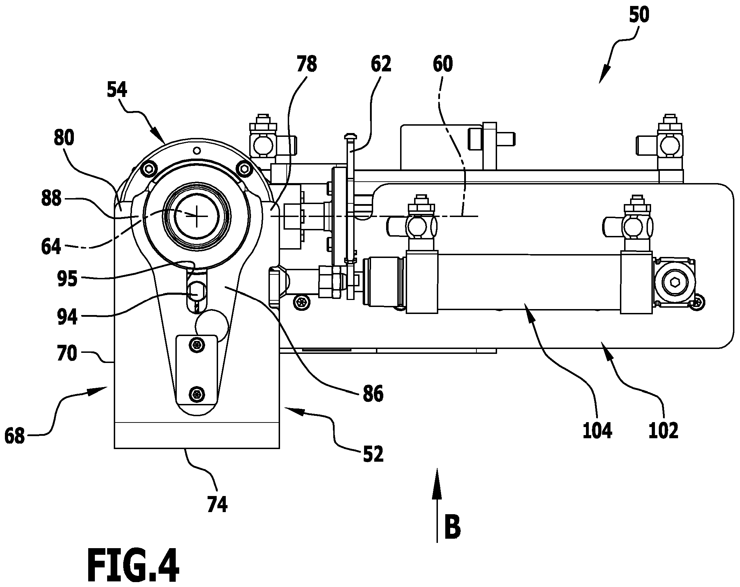

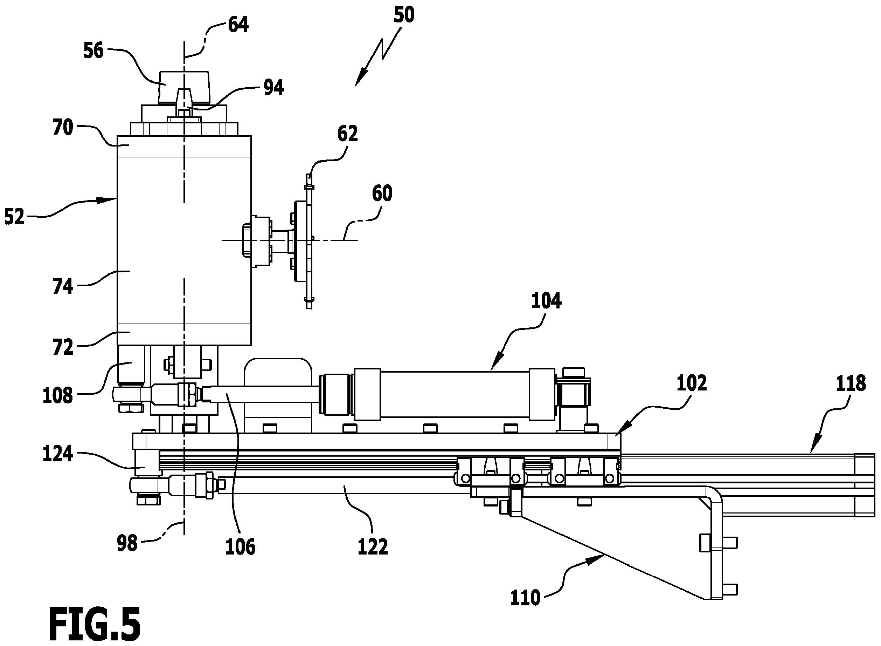

Das Lagerteil 100 ist ortsfest an einem plattenförmigen Tragteil 102 festgelegt, auf dessen dem Rahmen 68 zugewandter Oberseite ein Schwenkantrieb angeordnet ist. Im dargestellten Ausführungsbeispiel ist der Schwenkantrieb in Form eines pneumatischen Kolben-Zylinderaggregats 104 ausgebildet, dessen Kolbenstange 106 versetzt zur Schwenkachse 98 angeordnet ist. Das freie Ende der Kolbenstange 106 ist über einen parallel zur Schwenkachse 98 und versetzt zu dieser angeordneten Schwenkstift 108 mit dem unteren Schenkel 72 verbunden. Durch Beaufschlagen des Kolben-Zylinderaggregats 104 mit Druckluft kann die Kolbenstange 106 zwischen einer in Figur 3 dargestellten eingefahrenen Stellung und einer in Figur 5 dargestellten ausgefahrenen Stellung hin und her bewegt werden. Dies hat zur Folge, dass der Rahmen 68 zwischen einer in den Figuren 1, 2 und 3 dargestellten ersten Winkelstellung und einer in den Figuren 4 bis 8 dargestellten zweiten Winkelstellung hin und her verschwenkt werden kann. In der ersten Winkelstellung ist die Werkzeugachse 60 des in die Aufnahmeeinrichtung 52 eingesetzten Werkzeugaggregates 54 in Y-Richtung ausgerichtet, und in der zweiten Winkelstellung ist die Werkzeugachse 60 in X-Richtung ausgerichtet. Durch Verschwenken der Aufnahmeeinrichtung 52 kann somit die Winkelstellung der Werkzeugachse 60 verändert werden.

Das plattenförmige Tragteil 102 ist an einem Gestell 110 der Werkzeugpositioniervorrichtung 50 zwischen einer in der Zeichnung dargestellten Werkzeugübergabestellung und einer in der Zeichnung nicht dargestellten Parkstellung hin und her verschiebbar gelagert. Zur verschiebbaren Lagerung des Tragteils 102 am Gestell 110 kommt eine Führungseinrichtung 112 zum Einsatz mit einem am Gestell 110 festgelegten Führungsprofil 114 und einer an der dem Kolben-Zylinderaggregat 104 abgewandten Unterseite des Tragteils 102 angeordneten Führungsschiene 116. Die Führungsschiene 116 weist im dargestellten Ausführungsbeispiel eine schwalbenschwanzförmige Kontur auf und das Führungsprofil 114 weist im dargestellten Ausführungsbeispiel eine komplementär zur Führungsschiene 116 ausgebildete Führungsnut auf.

Das Gestell 110 der Werkzeugpositioniervorrichtung 50 ist am Maschinengestell 12 des vertikalen Bearbeitungszentrums 10 lösbar gehalten.

Das Tragteil 102 mit dem darauf angeordneten ersten Kolben-Zylinderaggregat 104 und der Aufnahmeeinrichtung 52 kann mittels eines Stellantriebs, der im dargestellten Ausführungsbeispiel als zweites Kolben-Zylinderaggregat 118 ausgestaltet ist, zwischen der in der Zeichnung dargestellten Werkzeugübergabestellung und der Parkstellung hin und her verschoben werden. In der Parkstellung nimmt die Aufnahmeeinrichtung 52 einen größeren Abstand zum Führungsbalken 24 ein als in der Werkzeugübergabestellung. Dies hat den Vorteil, dass die Bearbeitung des Werkstücks 22 in der Parkstellung der Aufnahmeeinrichtung 52 nicht von der Aufnahmeeinrichtung 52 beeinträchtigt wird.

Das zweite Kolben-Zylinderaggregat 118 weist einen am Gestell 110 festgelegten Stellzylinder 120 auf, der in üblicher Weise von einer in der Zeichnung nicht dargestellten Druckluftquelle mit Druckluft beaufschlagt werden kann, um eine Kolbenstange 122 des zweiten Kolben-Zylinderaggregats 118 hin und her zu bewegen. Das freie Ende der Kolbenstange 122 ist über einen am Tragteil 102 festgelegten Verbindungszapfen 124 mit dem Tragteil 102 verbunden. Durch Druckbeaufschlagung des Stellzylinders 120 kann das Tragteil 102 und mit diesem auch die Aufnahmeeinrichtung 52 zwischen der Werkzeugübergabestellung und der Parkstellung hin und her bewegt werden.

Nimmt die Aufnahmeeinrichtung 52 in der Werkzeugübergabestellung ihre in den Figuren 4 bis 8 dargestellte Winkelstellung ein, so kann das zunächst noch an der Arbeitsspindel 30 angeordnete Werkzeugaggregat 54 in die Aufnahmeeinrichtung 52 eingesetzt werden, indem der Halteabschnitt 90 des Werkzeugaggregats 54 mittels der Arbeitsspindel 30 in Höhe der Aufnahmegabel 76 positioniert und die Arbeitsspindel 30 anschließend so weit in Y-Richtung verfahren wird, dass der Halteabschnitt 90 in die Aufnahmegabel 76 eintaucht und die Werkzeuggreifer 84 in die Haltenut 92 eingreifen, wobei die Greifarme 86, 88 beim Einsetzen des Werkzeugaggregats 54 zunächst aufgespreizt werden und sich anschließend unter der Wirkung einer in der Zeichnung nicht dargestellten Rückstellfeder wieder einander annähern. Der Bolzen 94 tritt hierbei in die längliche Aussparung 95 ein. Dies wird insbesondere aus Figur 4 deutlich.

Anschließend kann die Arbeitsspindel 30 vom Werkzeugaggregat 54 gelöst werden, indem sie in Z-Richtung bewegt wird, so dass sie das Einspannende 56 des Werkzeugaggregates 54 freigibt. Die Aufnahmeeinrichtung 52 kann daraufhin zusammen mit dem Werkzeugaggregat 54 mit Hilfe des Kolben-Zylinderaggregates 104 um die Schwenkachse 98 in die in den Figuren 1, 2 und 3 dargestellte Winkelstellung verschwenkt werden.

Die Arbeitsspindel 30 kann dann wieder so weit in Z-Richtung verfahren werden, dass das Einspannende 56 des Werkzeugaggregates 54 in die komplementär ausgestaltete Werkzeugaufnahme der Arbeitsspindel 30 eintaucht und mit dieser drehfest verbunden werden kann. Die Aufnahmeeinrichtung 52 kann dann aus der Werkzeugübergabestellung in X-Richtung in ihre Parkstellung verfahren werden, sodass die Greifarme 86, 88 des Werkzeuggreifers 84 den Halteabschnitt 90 des Werkzeugaggregates 54 freigeben, indem sich die Greifarme 86, 88 aufspreizen. Das Werkzeugaggregat 54 kann nunmehr mit Hilfe der Arbeitsspindel 30 der Aufnahmeeinrichtung 52 vollständig entnommen werden zur weiteren Bearbeitung des Werkstücks 22, wobei nunmehr das Werkzeugaggregat 54 eine um 90° gedrehte Winkelstellung einnimmt.

## Patentansprüche

1. Werkzeugpositioniervorrichtung zum Vorpositionieren eines in eine Arbeitsspindel (30) einer Holzbearbeitungsmaschine (10) einwechselbaren Werkzeugaggregates (54), wobei die Werkzeugpositioniervorrichtung (50) eine um eine Schwenkachse (98) schwenkbar gelagerte Aufnahmeeinrichtung (52) zur Aufnahme des Werkzeugaggregats (54) aufweist sowie einen Schwenkantrieb (104) zum Verschwenken der Aufnahmeeinrichtung (52) um die Schwenkachse (98) in vorgegebene Winkelstellungen, und wobei das Werkzeugaggregat (54) mittels der Werkzeugpositioniervorrichtung (50) in unterschiedlichen Ausrichtungen relativ zur Arbeitsspindel (30) in die Arbeitsspindel (30) einwechselbar ist, **dadurch gekennzeichnet, dass** die Aufnahmeeinrichtung (52) eine Aussparung (95) für eine am Werkzeugaggregat (54) angeordnete Drehmomentstütze (94) aufweist.

2. Werkzeugpositioniervorrichtung nach Anspruch 1, **dadurch gekennzeichnet, dass** die Schwenkachse (98) die Aufnahmeeinrichtung (52) durchgreift.

3. Werkzeugpositioniervorrichtung nach Anspruch 1 oder 2, **dadurch gekennzeichnet, dass** die Aussparung (95) in eine freie Stirnfläche der Aufnahmeeinrichtung(52) einmündet.

4. Werkzeugpositioniervorrichtung nach einem der voranstehenden Ansprüche, **dadurch gekennzeichnet, dass** der Schwenkantrieb ein Kolben-Zylinderaggregat (104) oder einen Elektromotor aufweist.

5. Holzbearbeitungsmaschine mit einem Werkstückträger (18) zum Tragen eines plattenförmigen Werkstücks (22) aus Holz oder einem Holzersatzstoff, und mit einer Führungseinrichtung (24, 26), an der eine Arbeitsspindel (30) verfahrbar gelagert ist, und mit einem einwechselbaren Werkzeugaggregat (54), das mit der Arbeitsspindel (30) lösbar verbindbar ist, sowie mit einer Werkzeugpositioniervorrichtung (50) nach einem der voranstehenden Ansprüche.

6. Holzbearbeitungsmaschine nach Anspruch 5, **dadurch gekennzeichnet, dass** die Holzbearbeitungsmaschine als vertikales oder horizontales Bearbeitungszentrum (10) ausgestaltet ist.

## Claims

1. Tool positioning device for prepositioning a tool assembly (54), which is exchangeable into a work spindle (30) of a woodworking machine (10), wherein the tool positioning device (50) comprises a receiving means (52), which is mounted so as to be pivotable about a pivotal axis (98), for accommodating the tool assembly (54), as well as a pivot drive (104) for pivoting the receiving means (52) about the pivotal axis (98) into predetermined angular positions, and wherein the tool assembly (54) is exchangeable, by means of the tool positioning device (50), into the work spindle (30) in different orientations relative to the work spindle (30), **characterized in that** the receiving means (52) comprises a recess (95) for a torque support (94) arranged on the tool assembly (54).

2. Tool positioning device in accordance with Claim 1, **characterized in that** the pivotal axis (98) passes through the receiving means (52).

3. Tool positioning device in accordance with Claim 1 or 2, **characterized in that** the recess (95) opens into a free end face of the receiving means (52).

4. Tool positioning device in accordance with any one of the preceding Claims, **characterized in that** the pivot drive comprises a piston-cylinder assembly (104) or an electric motor.

5. Woodworking machine having a workpiece carrier (18) for carrying a plate-shaped workpiece (22) made of wood or a wood substitute, and having a guiding means (24, 26) on which a work spindle (30) is mounted for travel, and having an exchangeable tool assembly (54), which is releasably connectable to the work spindle (30), as well as having a tool positioning device (50) in accordance with any one of the preceding Claims.

6. Woodworking machine in accordance with Claim 5, **characterized in that** the woodworking machine is configured as a vertical or horizontal machining center (10).

## Revendications

1. Dispositif de positionnement d'outil pour le pré-positionnement d'un groupe d'outils (54) pouvant être inséré de manière amovible dans une broche de travail (30) d'une machine à bois (10), dans lequel le dispositif de positionnement d'outil (50) présente un système de réception (52), monté de manière à pouvoir pivoter autour d'un axe de pivotement (98), destiné à recevoir le groupe d'outils (54), ainsi qu'un entraînement en pivotement (104) destiné à faire pivoter le système de réception (52) autour de l'axe de pivotement (98) dans des positions angulaires prédéfinies, et dans lequel le groupe d'outils (54) peut être inséré de manière amovible dans la broche de travail (30) dans différentes orientations par rapport à la broche de travail (30) au moyen du dispositif de positionnement d'outil (50), **caractérisé en ce que** le système de réception (52) présente un évidement (95) pour un support de couple (94) disposé sur le groupe d'outils (54).

2. Dispositif de positionnement d'outil selon la revendication 1, **caractérisé en ce que** l'axe de pivotement (98) traverse le système de réception (52).

3. Dispositif de positionnement d'outil selon la revendication 1 ou 2, **caractérisé en ce que** l'évidement (95) débouche dans une face frontale libre du système de réception (52).

4. Dispositif de positionnement d'outil selon l'une quelconque des revendications précédentes, **caractérisé en ce que** l'entraînement en pivotement présente un groupe à piston et cylindre (104) ou un moteur électrique.

5. Machine à bois avec un porte-pièce (18) destiné à porter une pièce (22) en forme de plaque en bois ou composée d'un matériau de substitution du bois, et avec un système de guidage (24, 26), sur lequel une broche de travail (30) est montée de manière déplaçable, et avec un groupe d'outils (54) pouvant être inséré de manière amovible, qui peut être relié de manière détachable à la broche de travail (30), ainsi qu'avec un dispositif de positionnement d'outil (50) selon l'une quelconque des revendications précédentes.

6. Machine à bois selon la revendication 5, **caractérisée en ce que** la machine à bois est réalisée sous la forme d'un centre d'usinage (10) vertical ou horizontal.
